# EUROPEAN PATENT SPECIFICATION

(11) **EP 1 169 376 B1**
(45) Date of publication and mention of the grant of the patent: **15.09.2004**
(21) Application number: 99971009.8
(22) Date of filing: 26.10.1999
(51) Int. Cl.: C08J 9/14

(54) **PROCESS FOR PREPARATION OF POLYMERIC FOAM USING FLUORINATED KETONES AS BLOWING AGENTS**
VERFAHREN ZUR HERSTELLUNG VON POLYMEREM SCHAUM UNTER VERWENDUNG VON FLUORIERTEN KETONEN ALS TREIBMITTEL
PROCEDE DE PREPARATION DE MOUSSE POLYMERE A L'AIDE DE CETONES FLUOREES COMME AGENTS D'EXPANSION

(30) Priority: 26.10.1998 US 105623 P
(43) Date of publication of application: 09.01.2002
(73) Proprietor: 3M Innovative Properties Company, St. Paul, MN 55133-3427 (US)
(72) Inventor: DAMS, Rudolf, J., Saint Paul, MN 55133-3427 (US)
(74) Representative: VOSSIUS & PARTNER
(86) International application number: PCT/US1999/024210
(87) International publication number: WO 2000/024814

(56) References cited:
- US-A- 4 997 706

## Description

The present invention relates to the use of fluorinated compounds as blowing agents in the production of a polymeric foam and in particular in the production of polyurethane foams and phenolic foams. The invention further relates to a blowing agent composition and a foamable composition comprising a fluorinated compound.

According to "Cellular Materials," Encyclopedia of Polymer Science and Engineering, vol. 3, pages 1-59, (2d ed. John Wiley & Sons, 1985), foamed plastic is defined as a plastic in which the apparent density decreases substantially with the presence of numerous cells disposed through its mass. The gas phase in a foamed plastic is generally distributed in cells which are preferably very fine to provide good thermal insulation. Blowing agents produce gas used to generate cells in foamable polymeric materials, for example, to make foamed insulation. Physical blowing agents form cells by a phase change, for example, a liquid may be volatilized or a gas dissolved in a polymer under high pressure. Low boiling liquids, particularly chlorofluorocarbons (CFCs) and hydrochlorotluorocarbons (HCFCs), are used throughout the world on a large scale to produce foamed plastics. However, CFCs and HCFCs are linked to the destruction of the earth's protective ozone layer. See Encyclopedia, vol. 2, page 437.

Commercially important liquid blowing agents are aliphatic and cycloaliphatic hydrocarbons and their chloro- and fluoro-derivatives. For example, isomers of pentane, hexane, and heptane are used mainly in the production of very low density polystyrene foam. These liquids tend to be inexpensive and low in toxicity but they are highly flammable. See Encyclopedia, vol. 2, page 434, supra.

Production of cellular plastic products, such as cellular polyurethane elastomers and flexible, semi-rigid or rigid polyurethane foams in the presence of catalysts, blowing agents, processing aids or additives is described in numerous patents and publications in the literature.

A survey of methods of producing cellular polyurethane elastomers, polyurethane foams and polyisocyanurate foams, their mechanical properties and their use can be found, for example, High Polymers, Vol. 14, "Polyurethanes," Parts I and II by J. H. Saunders and K. C. Frisch (Interscience Publishers, New York 1962 and 1964), Plastics Handbook, Volume VII, "Polyurethanes," 1st ed. 1966, published by R. Vieweg and A. Hochtlen and 2d ed. 1983, published by G. Oertel (Carl Hanser Verlag, Munich), and "Integral Foams," published by H. Piechota and H. Rohr (Carl Hanser Verlag, Munich, 1975).

Essentially two types of blowing agents are used to produce cellular polyurethanes: (1) low boiling inert liquids that evaporate under the influence of the exothermic polymerization process, for example, alkanes, such as butane, n-pentane or cyclopentane, halogenated hydrocarbons or halogenated fluorocarbons, such as methylene chloride, dichloromonofluoromethane, and trichlorofluoromethane; and (2) chemical compounds that form gaseous blowing agents by means of a chemical reaction or thermal decomposition, such as isocyanate groups reacted with water to produce carbon dioxide.

U.S. Patent No. 4,972,002, describes producing cellular plastics by the polyisocyanate polyaddition process by reaction of (a) organic and/or modified organic polyisocyanates with (b) at least one high molecular compound with at least two reactive hydrogen atoms and, optionally, (c) low molecular weight chain extenders and/or cross-linking agents in the presence of (d) blowing agents, (e) catalysts, (f) additives and/or processing aids, wherein the blowing agents are low boiling fluorinated aliphatic and/or cycloaliphatic hydrocarbons that have 3 to 8 carbons. According to the teaching of this patent, the uniform fine celled structures are obtained by appropriate emulsification of the blowing agent that is insoluble or sparingly soluble in the reaction mixture. The cost of this type of blowing agent however presents a severe disadvantage.

U.S. Patent No. 5,290,823 discloses a blowing agent mixture for use in the production of rigid polyurethane foams. The mixture comprises from 5 to 40% by weight of highly fluorinated or perfluorinated compounds, from 30 to 95% by weight of cyclopentane and from 0 to 45% by weight of further aliphatic and/or cycloaliphatic hydrocarbon compounds having 4 to 8 carbon atoms. Since substantial amounts of the fluorinated blowing agent are replaced by cyclopentane and other hydrocarbon blowing agents, the blowing agent is less expensive than the blowing agent mixture disclosed in U.S. Patent No. 4,972,002. Also in this patent the fact that the fluorinated blowing agent is sparingly soluble or insoluble in the reactive mixture is taught to be essential to obtain a fine cell structure. The poor solubility, although effective in producing desirable foams, also presents disadvantages in the production of the foam. For example, the foamable emulsion produced has a low stability requiring continuous and vigorous stirring to maintain the emulsion. Moreover, the fluorinated blowing agent cannot be readily dissolved in the cyclopentane blowing agent so that both blowing agents need to be stored separately prior to their use in the foaming process.

U.S. Patent No. 4,981,879 describes a process for preparing cellular polymers Having methane groups, isocyanurate groups, or both. The cellular polymers are prepared by reacting an organic polyisocyanate with a polyol in the presence of a blowing agent, typically a hydrocarbon, hydrochlorofluorocarbon, or chlorofluorocarbons, a catalyst and a perfluorinated hydrocarbon or a mixture of perfluorinated hydrocarbons, such that the lower boiling perfluorinated hydrocarbons can function as a co-blowing agent. According to this U.S. patent, the perfluorochemical additive results in a size reduction of the cells and an improved initial k-factor relative to foams produced without the perfluorochemical additive.

The use of unsaturated perfluorochemicals as blowing agent or co-blowing agent is described in U.S. Patent No. 5,539,008. The use of the unsaturated perfluorochemical as co-blowing agent is said to be preferred due to cost and availability considerations. Conventional blowing agents disclosed for use in combination with the unsaturated perfluorochemical blowing agent include hydrocarbons such as pentane and cyclopentane.

U.S. Patent No. 5,210,106 discloses a blowing agent emulsion that comprises as a blowing agent a mixture of one or more low boiling hydrochlorofluorocarbons and/or one or more hydrofluorocarbons and one or more low boiling chlorine-free perfluorinated compounds; a fluorochemical surfactant and a continuous organic phase.

U.S. Patent No. 5,162,384 discloses a blowing agent emulsion comprising at least one low boiling, perfluorinated, N-aliphatic, cyclic 1,3-, or 1,4-aminoether blowing agent for use in a foamable polymerizable reaction mixture to produce a foamed plastic.

U.S. Patent No. 4,997,706 discloses the use of C₂₋₆ polyfluorocarbon compounds containing no chlorine or bromine atoms as physical blowing agent in the preparation of rigid, closed-cell, polymer foams. It is disclosed that the loss of thermal insulation with time of polyurethane foams produced with such blowing agents can be substantially reduced.

The invention provides a process for preparing polymeric foam comprising the step of vaporizing at least one compound of a blowing agent composition in the presence of at least one foamable polymer or a precursor composition thereof, wherein said blowing agent composition comprises fluorinated ketone wherein the fluorinated ketone is liquid under atmospheric pressure at a temperature of 20°C.

In addition to providing useful performance as blowing agents, the fluorinated ketones described herein can offer additional important benefits in safety of use and in environmental friendliness (e.g., zero ozone depletion potential and low atmospheric lifetime). For example, CF₃CF₂C(O)CF(CF₃)₂ has low acute toxicity (4 hour LC₅₀ >50,000 ppm). Also based on photolysis studies at 300 nm CF₃CF₂C(O)CF(CF₃)₂ has an estimated atmospheric lifetime of 3 to 5 days. Other fluorinated ketones show similar absorbances and are expected to have similar atmospheric lifetimes. As a result of their rapid degradation in the lower atmosphere, the perfluorinated ketones have short atmospheric lifetimes and would not be expected to contribute significantly to global warming. Further, polymeric foams produced by the process of this invention have excellent thermal insulation properties.

The invention further provides a blowing agent composition comprising:
(a) fluorinated ketone that is liquid at atmospheric pressure and 20°C, and
(b) physical blowing agent other than said fluorinated ketone. Also, this invention further provides foamable compositions comprising the blowing agent composition and provides foams made with such process, blowing agent, and/or foamable composition.

The fluorinated ketone is normally liquid, i.e., liquid at 20°C and atmospheric pressure, and is preferably a partially fluorinated ketone or perfluorinated ketone free of other halogens such as chlorine and bromine. Mixtures of fluorinated ketones may be employed in the invention. According to a particularly preferred embodiment, the blowing agent of this invention comprises a partially fluorinated or perfluorinated aliphatic ketone having at least 4 carbon atoms. The fluorinated ketone preferably has a boiling point in the range of 20°C to 200°C, more preferably 20°C to 130°C. A highly preferred fluorinated ketone for use in this invention corresponds to the following formula: 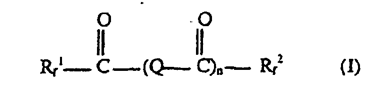 wherein R_{f}¹ and R_{f}² each independently represents a fluorinated aliphatic group or taken together form a cyclic group, Q represents a fluorinated or non-fluorinated alkylene group or a bond and n represents 0 or 1. Preferably at least one of R_{f}¹, R_{f}², and Q are perfluorinated, most preferably all three are perfluorinated. Particular examples of fluorinated ketones useful in this invention include:

C₂F₅COCF(CF₃)₂

(CF₃)₂CFCOCF(CF₃)₂

CF₃COCH₂COCF₃

CF₃COCF₂COCF₃

(CF₃)₂CFCOCH(CF₃)₂

(CF₃)₂CFCOCOCF(CF₃)₂

(CF₃)₂CFCOCF₂CF₂COCF(CF₃)₂

C₃F₇OCF(CF₃)COCF(CF₃)₂

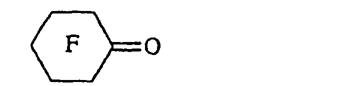

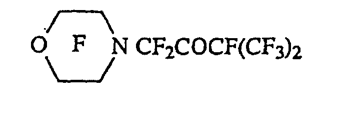

In one embodiment, the fluorinated ketone is dissolved or dispersed in a hydrofluoroether and mixtures of hydrofluoroethers, i.e., a partially fluorinated ether, may be employed. The use of the hydrofluoroether can substantially increase the compatibility of the fluorinated ketone with the other components of the foamable composition, making it easier to make the foam. Preferably, the hydrofluoroether comprises a perfluorinated aliphatic group bonded to a hydrocarbon group by an oxygen atom. The perfluoroaliphatic group may contain one or more catenary heteroatoms such as oxygen, nitrogen or sulfur, although oxygen and nitrogen are preferred if present. More preferably, the perfluoroaliphatic moiety comprises two to ten carbon atoms and may optionally contain either oxygen and/or nitrogen catenary heteroatoms, and the alkyl moieties comprise one to four carbon atoms.

Particulary preferred hydrofluoroethers correspond to the following formula:

(Rₕ-O)ₓ-R_{f} (II)

wherein:
x is 1 or 2;
Rₕ represents an alkyl group having 1 to 4 carbon atoms;
R_{f} represents a perfluorinated aliphatic group comprising at least two carbon atoms, preferably between 2 and 9 carbon atoms, and optional catenary heteroatoms such as oxygen, nitrogen and sulfur atoms.

When x is 1, R_{f} preferably is selected from linear or branched perfluoroalkyl groups, perfluorocycloalkyl groups containing a perfluoroalkyl group, perfluorocycloalkyl groups, linear or branched perfluoroalkyl groups having one or more catenary heteroatoms, perfluorocycloalkyl groups containing a perfluoroalkyl group having one or more catenary heteroatoms and perfluorocycloalkyl groups having one or more catenary heteroatoms. Particularly preferred catenary heteroatoms include oxygen or nitrogen atoms.

When x is 2, R_{f} is preferably selected from linear or branched perfluoroalkylene groups, perfluorocycloalkyl groups containing a perfluoroalkylene group, perfluorocycloalkylene groups, linear or branched perfluoroalkylene groups having one or more catenary heteroatoms, perfluorocycloalkyl groups containing a perfluoroalkylene group having one or more catenary heteroatoms and perfluorocycloalkylene groups having one or more catenary heteroatoms. Particularly preferred heteroatoms include oxygen and nitrogen atoms.

Most preferably, x is 1, and the hydrofluoroether is normally liquid, R_{f} is selected from linear or branched perfluoroalkyl groups having from 3 to 9 carbon atoms, perfluorocycloalkyl-containing perfluoroalkyl groups having from 5 to 7 carbon atoms, and perfluorocycloalkyl groups having.from 5 to 6 carbon atoms; Rₕ is a methyl or ethyl group; R_{f} can contain one or more catenary heteroatoms: and the sum of the number of carbon atoms in R_{f} and the number of carbon atoms in Rₕ is greater than or equal to 4.

Representative examples of hydrofluoroethers-suitable for use in the processes and composition of the invention include the following compounds :
n-C₄F₉OCH₃, n-C₄F₉OCH₂CH₃, CF₃CF(CF₃)CF₂OCH₃, CF₃CF(CF₃)CF₂OC₂H₅, C₈F₁₇OCH₃, CH₃O-(CF₂)₄-OCH₃, C₅F₁₁OC₂H₅, C₃F₇OCH₃, CF₃OC₂F₄OC₂H₅, C₃F₇OCF(CF₃)CF₂OCH₃, (CF₃)₂CFOCH₃, (CF₃)₃COCH₃, C₄F₉OC₂F₄OC₂F₄OC₂H₅, C₄F₉O(CF₂)₃OCH₃, 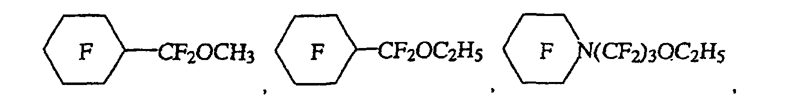 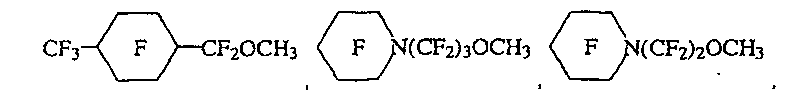 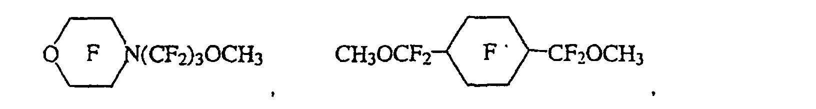 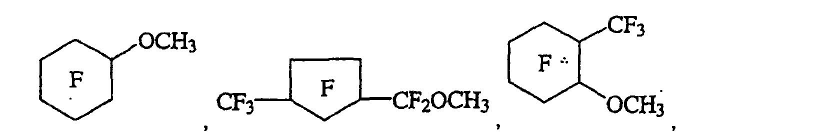 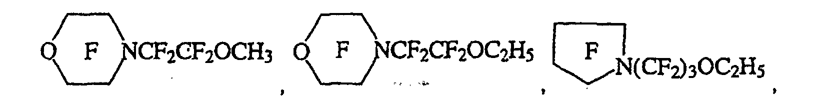 and 1,1 -dimethoxyperfluorocyciohexane.

In a particularly preferred embodiment of this invention, the blowing agent composition further comprises a co-blowing agent other that the fluorinated ketone and mixtures of co-blowing agents may be employed. Co-blowing agents include chlorofluorocarbons (CFCs), hydrochlorofluorocarbons (HCFCs), hydrofluorocarbons (HFCs), hydrochlorocarbons (HCCs), iodofluorocarbons (IFCs), and hydrocarbons. The co-blowing agent for use in this invention should have a boiling point of from 45°C to 100°C at atmospheric pressure. Preferably at atmospheric pressure the co-blowing agent has a boiling point of at least 20°C, more preferably between 20°C and 100°C, and most preferably between 30°C and 65°C.

Examples of co-blowing agents that can be used in the invention include aliphatic and cycloaliphatic hydrocarbons having 5 to 7 carbon atoms, such as n-pentane and cyclopentane, CFCs such as CFCl₃ (CFC-11) and CCl₂FCClF₂ (CFC-113), HFCs such as CF₃CF₂CHFCHFCF₃, CF₃CH₂CF₂H, CF₃CH₂CF₂CH₃, CF₃CF₂H, CH₃CF₂H (HFC-152a), CF₃CH₂CH₂CF₃ and CHF₂CF₂CH₂F, HCFCs such as CH₃CCl₂F, CF₃CHCl₂, and CF₂HCl, HCCs such as 2-chloropropane, and IFCs such as CF₃I.

Additionally, co-blowing agents can be perfluorochemical compounds. Suitable perfluorochemical compounds include a perfluorinated saturated or unsaturated hydrocarbon compound and in particular they include perfluoroaliphatic compounds, perfluorocycloaliphatic compounds, perfluoroolefin compounds, perfluorocycloolefin compounds and perfluoroaliphatic, perfluorocycloaliphatic, perfluoroolefin or perfluorocycloolefin compounds containing heteroatoms such as divalent oxygen, trivalent nitrogen and polyvalent sulfur. Preferably, the perfluorochemical compound contains 4 to 12 carbon atoms. Specific examples include perfluoroalkanes, such as perfluorobutane, perfluoropentane, perfluorohexane, perfluoroheptane, perfluorooctane; perfluorocycloalkanes, such as perfluorocyclobutane, perfluorodimethylcyclobutane, perfluoromethylcyclopentane; perfluoroethers, such as perfluoro-2-butyl-tetrahydrofuran, formals, such as perfluoro-3,5-dioxaheptane; perfluoroamines, such as perfluorotriethylamine, perfluoro-N-methyl pyrrolidine; perfluoroaminoethers, such as perfluoro-N-methyl morpholine; and perfluorinated sulfur compounds. Still further suitable perfluorochemical compounds include the perfluorinated heterocyclic compounds disclosed in US 5,162,384. Examples of perfluoroolefin compounds and perfluorocycloolefin compounds include hexafluoropropene dimers, e.g., perfluoro(4-methylpent-2-ene), and perfluoro(2-methylpent-2-ene); tetrafluoroethylene oligomers, e.g., perfluoro(3-methylpent-2-ene), perfluoro(3,4-dimethylhex-3-ene), and perfluoro(2,4-dimethyl-4-ethylhex-2-ene); perfluoro(1-pentene); perfluoro(2-pentene); perfluoro(1-hexene); perfluoro(2 -hexene); perfluoro(3-hexene); perfluoro(1-heptene); perfluoro(2-heptene); perfluoro(3-heptene); hexafluorobenzene; perfluorocyclopentene; isomers of C₆F₁₀, e.g., perfluorocyclohexene, perfluoro(1-methylcyclopentene), perfluoro(3-methylcyclopentene), and perfluoro(4-methylcyclopentene); perfluoro(1-methylcyclohexene); perfluoro(3-methylcyclohexene); perfluoro(4-methylcyclohexene); perfluoro(oxaalkenes), e.g., perfluoro(3-oxahex-1-ene), perfluoro(3-oxahept-1-ene), and perfluoro(3-oxa-4-methylpent-1-ene); and perfluoro(3-ethyl-3-azapent-1-ene).

When one or more co-blowing agents are used in combination with the fluorinated ketone, the blowing agent composition comprises preferably between 5 to 50 parts by weight of the co-blowing agent and between 0.5 and 10 parts by weight of the fluorinated ketone. A particularly preferred blowing agent composition of this invention comprises (in parts by weight) between 0.5 and 10 parts of fluorinated ketone, between 5 and 50 parts of one or more co-blowing agents, and between 0.1 and 2 parts of hydrofluoroether.

Foamable polymers suitable for use in the foamable compositions of the invention include polyolefins, e.g., polystyrene, poly(vinyl chloride), and polyethylene. Foams can be prepared from styrene polymers using conventional extrusion methods. The blowing agent composition can be injected into a heat-plastified styrene polymer stream within an extruder and admixed therewith prior to extrusion to form foam. Representative examples of suitable styrene polymers include the solid homopolymers of styrene, α-methylstyrene, ring-alkylated styrenes, and ring-halogenated styrenes, as well as copolymers of these monomers with minor amounts of other readily copolymerizable olefinic monomers. e.g., methyl methacrylate, acrylonitrile, maleic anhydride, citraconic anhydride, itaconic anhydride, acrylic acid, N-vinylcarbazole, butadiene, and divinylbenzene. Suitable vinyl chloride polymers include vinyl chloride homopolymer and copolymers of vinyl chloride with other vinyl monomers. Ethylene homopolymers and copolymers of ethylene with, e.g., 2-butene, acrylic acid, propylene, or butadiene are also useful. Mixtures of different types of polymers can be employed.

Precursors of foamable polymers suitable for use in the foamable compositions of the invention include precursors of phenolic polymers, silicone polymers, and isocyanate-based polymers, e.g., polyurethane, polyisocyanurate, polyurea, polycarbodiimide, and polyimide. Precursors of isocyanate-based polymers are preferred, as the blowing agent compositions of the invention are especially useful for preparing polyurethane or polyisocyanurate foams. Thus, preferred foamable compositions of the invention comprise (a) fluorinated ketone preferably dissolved or dispersed in a hydrofluoroether, (b) at least one organic polyisocyanate; and (c) at least one compound containing at least two reactive hydrogen atoms. The organic polyisocyanate may be the reaction product of at least one organic polyisocyanate and fluorochemical alcohol. Most preferably, the foamable composition further comprises at least one co-blowing agent.

Polyisocyanates suitable for use in the preferred compositions of the invention include aliphatic, alicyclic, arylaliphatic, aromatic, or heterocyclic polyisocyanates, or combinations thereof. Any polyisocyanate which is suitable for use in the production of polymeric foams can be utilized. Of particular importance are aromatic diisocyanates such as toluene and diphenylmethane diisocyanates in pure, modified, or crude form. MDI variants (diphenylmethane diisocyanate modified by the introduction of urethane, allophanate, urea, biuret, carbodiimide, uretonimine, or isocyanurate residues) and the mixtures of diphenylmethane diisocyanates and oligomers thereof known in the art as crude or polymeric MDI (polymethylene polyphenylene polyisocyanates) are especially useful.

Representative examples of suitable polyisocyanates include ethylene diisocyanate, 1,4-tetramethylene diisocyanate, 1,6-hexamethylene diisocyanate, trimethyl hexamethylene diisocyanate, 1,12-dodecane diisocyanate, cyclobutane-1,3-diisocyanate, cyclohexane-1,3-and -1,4-diisocyanate (and mixtures of these isomers), diisocyanato-3,3,5-trimethyl-5-isocyanatomethyl cyclohexane, 2,4- and 2,6-toluene diisocyanate (and mixtures of these isomers), diphenylmethane-2,4'- and/or -4,4'-diisocyanate, naphthalene-1,5-diisocyanate, the reaction products of four equivalents of the aforementioned isocyanate-containing compounds with compounds containing two isocyanate-reactive groups, triphenyl methane-4,4',4"-triisocyanate, polymethylene polyphenylene polyisocyanates, m- and p-isocyanatophenyl sulfonyl isocyanates, perchlorinated aryl polyisocyanates, polyisocyanates containing carbodiimide groups, norbornane diisocyanates, polyisocyanates containing allophanate groups, polyisocyanates containing isocyanurate groups, polyisocyanates containing urethane groups, polyisocyanates containing acrylated urea groups, polyisocyanates containing biuret groups, polyisocyanates produced by telomerization reactions, polyisocyanates containing ester groups, reaction products of the above-mentioned diisocyanates with acetals, polyisocyanates containing polymeric fatty acid esters, and mixtures thereof. Distillation residues (obtained in the commercial production of isocyanates) having isocyanate groups can also be used alone or in solution in one or more of the above-mentioned polyisocyanates.

Reactive hydrogen-containing compounds suitable for use in the preferred foamable compositions of the invention are those having at least two isocyanate-reactive hydrogen atoms, preferably in the form of hydroxyl, primary or secondary amine, carboxylic acid, or thiol groups, or a combination thereof. Polyols, i.e., compounds having at least two hydroxyl groups per molecule, are especially preferred due to their desirable reactivity with polyisocyanates. Preferred polyols are those having from 2 to 50, preferably from 2 to 8, more preferably from 2 to 4, hydroxyl groups. Such polyols can be, e.g., polyesters, polyethers, polythioethers, polyacetals, polycarbonates, polymethacrylates, polyester amides, or hydroxyl-containing prepolymers of these compounds and a less than stoichiometric amount of polyisocyanate. Generally, the reactive hydrogen-containing compounds utilized in the preferred foamable compositions of the invention have a weight average molecular weight of from 50 to 50,000, preferably from 500 to 25,000.

Representative examples of suitable reactive hydrogen-containing compounds have been described, e.g., by J. H. Saunders and K. C. Frisch in High Polymers, Volume XVI, "Polyurethanes," Part I, pages 32-54 and 65-88, Interscience, New York (1962). Mixtures of such compounds are also useful, and, in some cases, it is particularly advantageous to combine low-melting and high-melting polyhydroxyl-containing compounds with one another, as described in DE 2,706,297 (Bayer AG). Useful polyols include ethylene glycol, 1,2- and 1,3-propylene glycol, 1,4- and 2,3-butylene glycol, 1,5-pentane diol, 1,6-hexane diol, 1,8-octane diol, neopentyl glycol, 1,4-bis(hydroxymethyl)cyclohexane, 2-methyl-1,3-propane diol, dibromobutene diol; glycerol, trimethylolpropane, 1,2,6-hexanetriol, trimethylolethane, pentaerythritol, quinitol, mannitol, sorbitol, diethylene glycol, triethylene glycol, tetraethylene glycol, higher polyethylene glycols, dipropylene glycol, higher polypropylene glycols, dibutylene glycol, higher polybutylene glycols, 4,4'-dihydroxydiphenyl propane, and dihydroxymethyl hydroquinone. Other suitable polyols include the condensation products of polybasic acids and polyols such as polyethylene adipate and polycaprolactone-based polyols, as well as the mixtures of hydroxy aldehydes and hydroxy ketones ("formose") and the polyhydric alcohols obtained therefrom by reduction ("formitol") that are formed in the autocondensation of formaldehyde hydrate in the presence of metal compounds as catalysts and compounds capable of enediol formation as co-catalysts (see, e.g., U.S. Patent No. 4,341,909 (Schneider et al.), U.S. Patent No. 4,247,653 (Wagner), U.S. Patent No. 4,221,876 (Wagner), U.S. Patent No. 4,326,086 (Mohring et al.), and U.S. Patent No. 4,205,138 (Muller et al.), as well as CA 1,088,523 (Bayer AG)). Solutions of polyisocyanate polyaddition products, particularly solutions of polyurethane ureas containing ionic groups and/or solutions of polyhydrazodicarbonamides, in low molecular weight polyhydric alcohols can also be used (see DE 2,638,759).

Many other compounds containing isocyanate-reactive hydrogen atoms are useful in the preferred foamable compositions of the invention, as will be apparent to those skilled in the art of polyurethane science and technology.

Phenolic polymer precursors suitable for use in the compositions of this invention include the reaction product of a phenol and an aldehyde in the presence of a catalyst. The manufacturing process is somewhat similar to that for making polyurethane foams and results in a product having greater than 90% closed cell content. Illustrative uses of phenolic foams of this invention include use for roofing insulation, as sheathing products for external wall insulation for building applications, and for shaped parts such as pipe and block insulation for industrial applications, as described in "Thermal Insulation," Encyclopedia of Chemical Technology, vol: 14, pages 648-662 (4th ed., John Wiley & Sons, 1995).

Polymeric foams can be prepared using the preferred foamable compositions of the invention by vaporizing (e.g., by utilizing the heat of precursor reaction) at least one normally liquid, blowing agent in the presence of a fluorinated ketone that is preferably dissolved or dispersed in a hydrofluoroether, at least one organic polyisocyanate and at least one compound containing at least two reactive hydrogen atoms. Preferably, from 1 to 10 parts by weight of a fluorinated ketone is used in combination with from 100 to 300 parts by weight of polyisocyanate(s) and from 100 to 150 parts by weight of reactive hydrogen-containing compound(s). Most preferably, a co-blowing agent is also used in an amount from 5 to 50 parts by weight. In making a polyisocyanate-based foam, the polyisocyanate, reactive hydrogen-containing compound, and blowing agent composition can generally be combined, thoroughly mixed (using, e.g., any of the various known types of mixing head and spray apparatus), and permitted to expand and cure into a cellular polymer. It is often convenient, but not necessary, to preblend certain of the components of the foamable composition prior to reaction of the polyisocyanate and the reactive hydrogen-containing compound. For example, it is often useful to first blend the reactive hydrogen-containing compound, blowing agent composition, and any other components (e.g., surfactant) except the polyisocyanate, and to then combine the resulting mixture with the polyisocyanate. Alternatively, all components of the foamable composition can be introduced separately. It is also possible to pre-react all or a portion of the reactive hydrogen-containing compound with the polyisocyanate to form a prepolymer.

Other conventional components of foam formulations can optionally be present in the foamable compositions of the invention. For example, cross-linking or chain-extending agents, foam-stabilizing agents or surfactants, catalysts and fire-retardants can be utilized. Other possible components include cell regulators, fillers (e.g., carbon black), colorants, fungicides, bactericides, antioxidants, reinforcing agents, antistatic agents, and other additives or processing aids known to those skilled in the art.

Preferably, the foamable compositions of the invention include at least one surfactant. Suitable surfactants include fluorochemical surfactants, organosilicone surfactants, polyethylene glycol ethers of long chain alcohols, tertiary amine or alkanolamine salts of long chain alkyl acid sulfate esters, alkyl sulfonate esters, alkyl arylsulfonic acids, fatty acid alkoxylates, and mixtures thereof. Surfactant is generally employed in amounts sufficient to stabilize the foaming reaction mixture against collapse and the formation of large, uneven cells. Typically, from 0.1 to 5 percent by weight of surfactant is sufficient for this purpose. Organosilicone surfactants and fluorochemical surfactants are preferred.

The preferred foamable composition preferably also contains a catalyst. Catalysts suitable for use in the preferred foamable compositions of the invention include compounds which greatly accelerate the reaction of the reactive hydrogen-containing compounds (or the cross-linking or chain-extending agents) with the polyisocyanates. When used, catalysts are generally present in amounts sufficient to be catalytically effective. Suitable catalysts include organic metal compounds (preferably, organic tin compounds), which can be used alone or, preferably, in combination with strongly basic amines. Representative examples of these and other types of suitable catalysts are described in U.S. Pat. No. 4,972,002 (Volkert).

Foams prepared from the foamable compositions of the invention can vary in texture from very soft types useful in upholstery applications to rigid foams useful as structural or insulating materials. The foams can be used, for example, in the automobile, shipbuilding, aircraft, furniture, and athletic equipment industries, and are especially useful as insulation materials in the construction and refrigeration industries.

The following examples are intended to further illustrate the invention without however the intention to limit the invention thereto. In the examples, all percentage and parts are by weight unless indicated otherwise.

### EXAMPLES

In the following examples and comparative examples, the thermal conductivity (lambda) values of the foams were measured on a 200x200x25 cm³ test sample, perpendicular to the foam rise direction. The thermal conductivity was measured at a temperature of 23°C, initially and after heat aging at 50°C for 2 weeks, using a Hesto Lambda Control A-50 thermal conductivity analyzer with a reproducibility of ±0.1 (mW/mk).

The range of cell size diameters described in the examples and the comparative examples were designated as follows:

| | |
|---|---|
| Very fine | 70-100 µm |
| Fine | 100-150 µm |
| medium | 150-200 µm |
| large | 200-300 µm |
| very large | larger than 300 µm |

### Abbreviations

The following abbreviations and tradenames were used in the examples :
pbw : parts by weight
Isocyanate 44 V-20 : polymeric diisocyanate having an isocyanate content of 31.5 % by weight and a viscosity of 200 ±40 cps at 25°C, commercially available from Bayer AG.
Polyol 1751 A/2 : polyether polyol having a hydroxy equivalent weight of 425 mg KOH/g, a water content of 4.6 pbw, a catalyst content of 3.7 pbw N,N-dimethylcyclohexylamine and a viscosity of about 820 cps at 25°C, commercially available from Bayer AG under the trade name Baytherm™ VP-PU 1751 A/2.
Polyol 1832 A/2 : polyether polyol having a hydroxy equivalent weight of 520 mg KOH/g, a water content of 1.9 parts, a catalyst content of 3.7 parts N,N-dimethylcyclohexylamine and a viscosity of about 4000 cps at 25°C, commercially available from Bayer AG under the trade name Baytherm™ VP-PU 1832 A/2.
Silicone surfactant B-8423 : available from T.H. Goldschmidt
rpm: revolutions per minute.
FC-75 : FLUOROINERT™ FC-75 perfluorinated liquid, commercially available from 3M
FC-10 : FLUORAD™ FC-10- fluorochemical alcohol N-ethyl perfluorooctane sulfonamido ethanol, commercially available from 3M
Ex.: Example.

### Example 1 and Comparative Example C-1

### Example 1 : preparation of polyurethane foam using a blowing agent mixture of perfluorinated ketone and water.

3.5 pbw of C₂F₅COCF(CF₃)₂ was emulsified in 118 pbw of polyol 1751 A/2, with 3.5 pbw silicone surfactant B-8423, using a Pendraulic LD-50 high shear mixer at 6000 rpm. To this emulsion was added 225 g Desmodur™ 44V-20, while mixing at 6000 rpm for 15 seconds. The resulting mixture was poured in a 350 cm x 350 cm x 60 cm aluminum mold, which was preheated at 50°C.

Comparative Example C-1 was made essentially according to the same procedure as described for Example 1, but with water which would react with diisocyanate to generate CO₂ blowing agent. No fluoroketone was added. The composition, density and thermal conductivity values (initially and after heat aging) for the resulting foams are shown in Table 1.

**Table 1**

| Components | Amount of Component (pbw) | |
|---|---|---|
| | Ex. 1 | Ex. C-1 |
| Polyol 1751 A/2 | 118 | 118 |
| Silicone B-8423 | 3.5 | 3.5 |
| Isocyanate 44 V-20 | 225 | 225 |
| C₂F₅COCF(CF₃)₂ | 3.5 | - |
| Density (kg/m³) | 39.7 | 40.3 |
| Initial thermal conductivity (mW/mK) | 22.9 | 24.7 |
| Aged thermal conductivity (mW/mK) | 32.3 | 34.8 |
| Average cell size | large | very large |

The data show that the thermal insulation properties of the foam made in Example 1 were superior to those of Comparative Example C-1 foam. Furthermore, foam made with a blowing agent mixture of CO₂ and perfluorinated ketone had a smaller cell size.

### Examples 2 to 6

In Examples 2 to 6, polyurethane foams were prepared essentially according to the procedure as described for Example 1, using the blowing agents given in Table 2. Comparative Example C-2 was made without a fluorinated ketone and Comparative Example C-3 was made with a mixture of FC-75 and cyclopentane as blowing agent. The density and thermal conductivity data for the resulting foams as well as the average cell sizes are given in Table 2.

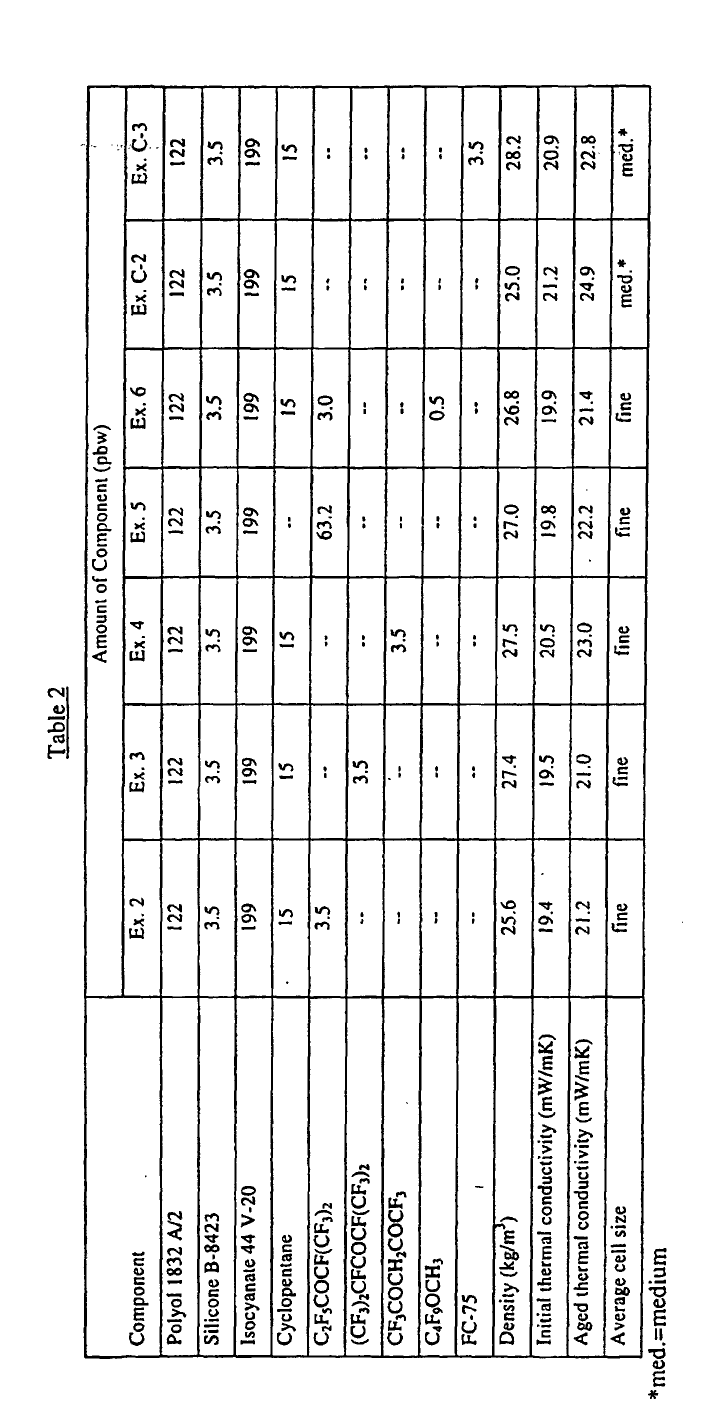

The results show that polyurethane foams prepared with a blowing agent mixture comprising fluorinated ketones had good to very good thermal conductivity. Furthermore, it was noticed that the cell size of foams prepared in accordance with the invention were considerably reduced. Foams prepared with perfluorinated ketone as the only blowing agent also had good thermal conductivity and fine cells.

### Example 7

In Example 7, polyurethane foam was made using a fluorochemical modified isocyanate. A 500 ml three necked flask, equipped with a stirrer, thermometer and condensor was charged with 197 g Desmodur™ 44V-20 and 2 g fluorochemical-alcohol FC-10. The mixture was heated to 75°C under nitrogen atmosphere for 4 hours, after which GLC indicated that all fluorochemical alcohol FC-10 had reacted. A polyurethane foam then was prepared essentially according to the procedure of Example 1 using components and amounts given in Table 3. The density and thermal conductivity values for the resulting foam are recorded in Table 3.

**Table 3**

| Component | Amount of Component (pbw) |
|---|---|
| Polyol 1832 A/2 | 122 |
| Silicone B-8423 | 3.5 |
| FC modified isocyanate | 199 |
| Cyclopentane | 15 |
| C₂F₅COCF(CF₃)₂ | 3.5 |
| Density (kg/m³) | 25.9 |
| Initial thermal conductivity (mW/mK) | 18.8 |
| Aged thermal conductivity (mW/mK) | 20.6 |
| Average cell size | very fine |

The results indicate that polyurethane foam, made from a fluorochemical modified isocyanate and a blowing agent mixture of fluorinated ketone and cyclopentane had very good thermal conductivity, both initially and after aging at 50°C, combined with very fine cell size.

## Claims

1. A process for preparing polymeric foam comprising the step of vaporizing at least one compound of a blowing agent composition in the presence of at least one foamable polymer or a precursor composition thereof, wherein said blowing agent composition comprises fluorinated ketone wherein said ketone is liquid at atmospheric pressure and 20°C.

2. A process according to claim 1 wherein said fluorinated ketone is selected from partially fluorinated or perfluorinated ketones having at least 4 carbon atoms.

3. A process according to claim 2 wherein said fluorinated ketone is an aliphatic ketone having at least 4 carbon atoms.

4. A process according to claim 2 wherein said fluorinated ketone corresponds to the following formula: 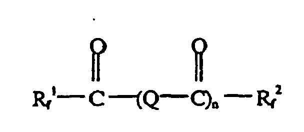 wherein: R_{f}¹ and R_{f}² each independently represents a fluorinated aliphatic group, Q represents a fluorinated or non-fluorinated alkylene group or a bond and n represents 0 or 1.

5. A process according to claim 1 wherein said blowing agent composition further comprises physical blowing agent other than said fluorinated ketone that is liquid at atmospheric pressure and 20°C.

6. A process according to claim 5 wherein said physical blowing agent is selected from hydrocarbon compounds and halogenated hydrocarbon compounds.

7. A process according to claim 1 wherein said blowing agent composition further comprises hydrofluoroether.

8. A process according to claim 1 wherein said foamable polymer or a precursor composition thereof comprises at least one organic polyisocyanate and at least one compound containing at least two reactive hydrogen atoms.

9. A process according to claim 8 wherein said organic polyisocyanate is the reaction product of at least one organic polyisocyanate and fluorochemical alcohol.

10. A blowing agent composition comprising fluorinated ketone and physical blowing agent other than said fluorinated ketone wherein said fluorinated ketone is liquid at atmospheric pressure and 20°C.

11. A blowing agent composition according to claim 10 wherein said physical blowing agent is selected from hydrocarbon compounds and halogenated hydrocarbon compounds.

12. A foamable composition comprising foamable polymer or a precursor composition thereof and a blowing agent composition according to claim 10.

13. A foamable composition according to claim 12 wherein said foamable polymer or a precursor composition thereof comprises an organic polyisocyanate and a polyol.

14. A foamable composition according to claim 12 wherein said foamable polymer or precursor composition comprises a phenolic polymer precursor.

15. A foamable composition according to claim 12 wherein said foamable polymer or precursor composition comprises the reaction product of at least one organic polyisocyanate and fluorochemical alcohol.

## Patentansprüche

1. Verfahren zur Herstellung von polymerem Schaum, umfassend den Schritt des Verdampfens mindestens einer Verbindung einer Treibmittelzusammensetzung in Gegenwart mindestens eines schäumbaren Polymers oder einer Vorläuferzusammensetzung davon, wobei die Treibmittelzusammensetzung fluoriertes Keton umfasst, wobei das Keton unter atmosphärischem Druck und bei 20°C flüssig ist.

2. Verfahren gemäß Anspruch 1, wobei das fluorierte Keton ausgewählt ist aus teilweise fluorierten oder perfluorierten Ketonen mit mindestens 4 Kohlenstoffatomen.

3. Verfahren gemäß Anspruch 2, wobei das fluorierte Keton ein aliphatisches Keton mit mindestens 4 Kohlenstoffatomen ist.

4. Verfahren gemäß Anspruch 2, wobei das fluorierte Keton folgender Formel entspricht: 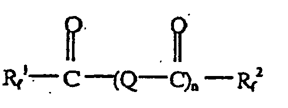 wobei R_{f}¹ und R_{f}² jeweils unabhängig einen fluorierten aliphatischen Rest darstellen, Q einen fluorierten oder nichtfluorierten Alkylenrest oder eine Bindung und n 0 oder 1 darstellen.

5. Verfahren gemäß Anspruch 1, wobei die Treibmittelzusammensetzung ferner ein physikalisches Treibmittel umfasst, welches vom fluorierten Keton, welches unter atmosphärischem Druck und bei 20°C flüssig ist, verschieden ist.

6. Verfahren gemäß Anspruch 5, wobei das physikalische Treibmittel ausgewählt ist aus Kohlenwasserstoffverbindungen und halogenierten Kohlenwasserstoffverbindungen.

7. Verfahren gemäß Anspruch 1, wobei die Treibmittelzusammensetzung ferner Hydrofluorether umfasst.

8. Verfahren gemäß Anspruch 1, wobei das schäumbare Polymer oder eine Vorläuferzusammensetzung davon mindestens ein organisches Polyisocyanat und mindestens eine Verbindung, welche mindestens zwei reaktive Kohlenwasserstoffatome enthält, umfasst.

9. Verfahren gemäß Anspruch 8, wobei das organische Polyisocyanat das Umsetzungsprodukt mindestens eines organischen Polyisocyanats und fluorchemischen Alkohols ist.

10. Treibmittelzusammensetzung, umfassend fluoriertes Keton und ein physikalisches Treibmittel, welches vom fluorierten Keton verschieden ist, wobei das fluorierte Keton unter atmosphärischem Druck und bei 20°C flüssig ist.

11. Treibmittelzusammensetzung gemäß Anspruch 10, wobei das physikalische Treibmittel ausgewählt ist aus Kohlenwasserstoffverbindungen und halogenierten Kohlenwasserstoffverbindungen.

12. Schäumbare Zusammensetzung, umfassend ein schäumbares Polymer oder eine Vorläuferzusammensetzung davon und eine Treibmittelzusammensetzung gemäß Anspruch 10.

13. Schäumbare Zusammensetzung gemäß Anspruch 12, wobei das schäumbare Polymer oder eine Vorläuferzusammensetzung davon ein organisches Polyisocyanat und ein Polyol umfasst.

14. Schäumbare Zusammensetzung gemäß Anspruch 12, wobei das schäumbare Polymer oder die Vorläuferzusammensetzung einen Phenolpolymervorläufer umfasst.

15. Schäumbare Zusammensetzung gemäß Anspruch 12, wobei das schäumbare Polymer oder die Vorläuferzusammensetzung ein Reaktionsprodukt mindestens eines organischen Polyisocyanats und fluorchemischen Alkohols umfasst.

## Revendications

1. Procédé de préparation d'une mousse polymère comprenant les étapes consistant à vaporiser au moins un composé d'une composition d'agent d'expansion en présence d'au moins un polymère capable de mousser ou d'une composition précurseur de celui-ci, dans lequel ladite composition d'agent d'expansion comprend de la cétone fluorée, ladite cétone étant liquide à la pression atmosphérique et à 20°C.

2. Procédé selon la revendication 1, dans lequel ladite cétone fluorée est sélectionnée à partir des cétones partiellement fluorées ou perfluorées ayant au moins 4 atomes de carbone.

3. Procédé selon la revendication 2, dans lequel ladite cétone fluorée est une cétone aliphatique ayant au moins 4 atomes de carbone.

4. Procédé selon la revendication 2, dans lequel ladite cétone fluorée correspond à la formule suivante : 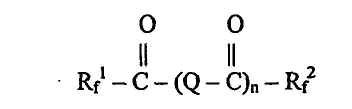 dans laquelle R_{f}¹ et R_{f}² représentent chacun indépendamment un groupe aliphatique fluoré, Q représente un groupe ou une liaison alkylène fluoré ou non fluoré et n représente 0 ou 1.

5. Procédé selon la revendication 1, dans lequel ladite composition d'agent d'expansion comprend en outre un agent d'expansion physique autre que ladite cétone fluorée qui est liquide à la pression atmosphérique et à 20°C.

6. Procédé selon la revendication 5, dans lequel ledit agent d'expansion physique est sélectionné à partir des composés hydrocarbonés et des composés hydrocarbonés halogénés.

7. Procédé selon la revendication 1, dans lequel ladite composition d'agent d'expansion comprend en outre de l'hydrofluoroéther.

8. Procédé selon la revendication 1, dans lequel ledit polymère capable de mousser ou la composition précurseur de celui-ci comprend au moins un polyisocyanate organique et au moins un composé contenant au moins deux atomes d'hydrogène réactif.

9. Procédé selon la revendication 8, dans lequel ledit polyisocyanate organique est le produit de réaction d'au moins un polyisocyanate organique et d'un alcool fluorochimique.

10. Composition d'agent d'expansion comprenant de la cétone fluorée et un agent d'expansion physique autre que ladite cétone fluorée, dans laquelle ladite cétone fluorée est liquide à la pression atmosphérique et à 20°C.

11. Composition d'agent d'expansion selon la revendication 10 dans laquelle ledit agent d'expansion physique est sélectionné à partir des composés hydrocarbonés et des composés hydrocarbonés halogénés.

12. Composition capable de mousser comprenant un polymère capable de mousser ou une composition précurseur de celui-ci et une composition d'agent d'expansion selon la revendication 10.

13. Composition capable de mousser selon la revendication 12 dans laquelle ledit polymère capable de mousser ou une composition précurseur de celui-ci comprend un polyisocyanate organique et un polyol.

14. Composition capable de mousser selon la revendication 12, dans laquelle ledit polymère capable de mousser ou la composition précurseur de celui-ci comprend un précurseur de polymère phénolique.

15. Composition capable de mousser selon la revendication 12, dans laquelle ledit polymère capable de mousser ou la composition précurseur comprend le produit de réaction d'au moins un polyisocyanate organique et un alcool fluorochimique.
